# NEW EUROPEAN PATENT SPECIFICATION

(11) **EP 0 088 584 B2**
(45) Date of publication and mention of the opposition decision: **17.09.1997**
(45) Mention of the grant of the patent: 29.05.1991
(21) Application number: 83301099.4
(22) Date of filing: 01.03.1983
(51) Int. Cl.: B29C 70/00, B29C 67/24, B32B 31/00

(54) **Method of providing a moulded or mouldable fibre reinforced thermoplastics material**
Verfahren zur Herstellung eines geformten oder formbaren faserverstärkten thermoplastischen Materials
Procédé de fabrication d'une matière thermoplastique moulée ou moulable renforcée de fibres

(30) Priority: 09.03.1982 GB 8206916
(43) Date of publication of application: 14.09.1983
(73) Proprietor: The Wiggins Teape Group Limited, Basingstoke Hampshire RG21 2EE (GB)
(72) Inventor: Leach, David Wesley, Great Missenden Buckingshamshire (GB); Radvan, Bronislaw, Flackwell Heath Buckinghamshire (GB)
(74) Representative: Bridge-Butler, Alan James

(56) References cited:
- FR-A- 1 548 940
- FR-A- 2 319 660
- GB-A- 2 087 309
- US-A- 2 794 756
- US-A- 3 026 228
- US-A- 3 531 369
- US-A- 3 684 645
- US-A- 3 928 693
- US-A- 4 153 490
- US-A- 4 216 776
- US-A- 4 269 884
- US-A- 4 291 084
- ASTME Eng. Conference - MatLs. Finishing & Coating - Collected Papers May 5-9, 1969, Paper EM 69-184
- Tech. Pap. Reg. Tech. Conf. Soc. Plast. Eng., Cleveland Sect., Oct. 4-5, 1971, 23-48; NORWALK; pp. 36, 37 "Overlays"
- Modern Plastics, January 1974, pp. 70-74; Sikes; p. 74 para. 2

## Description

This invention relates to a method of providing a moulded or mouldable fibre reinforced thermo-plastics material having improved surface smoothness according to the first part of claim 1. Such a method is known from US-A-4291084.

The use of fibre reinforced sheet thermoplastics is increasing, especially in the automotive and appliance industries. Such materials consist of laminates formed from alternating mats of glass fibre and layers of thermoplastics material which are then consolidated into a sheet by the application of heat and pressure. Materials of this kind are disclosed in United States Patents Nos. 3531369 and 3684645. It however is a major disadvantage of these materials that their surface is marred by occasional fibres protruding therethrough. This occurs especially, when the content of such fibres is relatively high, for example, in excess of 40% by weight, this being when their physical properties are most advantageous.

It is believed that at some stage in the manufacture of the sheet, or subsequently, during consolidation or heat forming, the glass fibre mat, embedded in the plastics matrix is compressed to below its original thickness. The fibres, being elastic and incompressible remain in a state of "frozen strain" within the solidified matrix. When the matrix is softened again, in order to form an article from the sheet under heat and pressure, the mat relaxes and causes the fibres to protrude through the surface. The effect is particularly no-ticeable when the surface of the material has to be fully molten, and then solidified in contact with a cold surface of the forming tool, in order to obtain a smooth glazed surface.

United States Patent Specification No. 4291084 discloses a laminated sheet comprising a pair of thermoplastic layers, the single surface layer incorporates mica to enhance the viscosity of the material when heated to suppress glass fibre show through. Similarly French Patent Specification No. 2319660 (GB A 1547280) discloses a similar process to produce a moulding with a smooth surface and which includes a fibre reinforced base layer and a surface layer in the form of a film containing a solid filler. Because there is only a single surface layer fibres do tend to protrude and thus prevent a smooth surface layer.

French Patent Specification No. 2319660 refers to an earlier process for improving a surface finish by providing a glass reinforced plastics mat of A-or E-glass fibres of a diameter from 6 to 15 µ. The specification states that the surface roughness is substantially reduced but on deep drawing or pressing the glass fibre mats tend to tear. It also refers to the use of polymer fibres or mats of polymer fibres but these mats do not have the heat resistance required for processing. It is suggested that the surface of the moulds can be improved by laminating films onto them but this process is only worth carrying out if in addition an intermediate layer of a servicing mat which is as thick as possible and weighs at least 30 gm/m² is introduced between the sheeting and the film. A disadvantage of this latter process is the thickness of the intermediate layer. Moreover this intermediate layer is in the form of a mat which will carry glass fibres itself so the surface is only protected by the single film.

The present invention is intended to overcome some of the disadvantages referred to above and provide a moulded or mouldable fibre reinforced thermoplastics material with an improved surface smoothness.

The present invention comprises a method of providing a moulded or mouldable fibre reinforced thermoplastics material having improved surface smoothness in which thermoplastic surfacing material is laminated to said fibre reinforced thermoplastics material under heat and pressure, characterised in that said surfacing material comprises a multi-layer film which includes a first film of a first thermoplastics material arranged in contiguous relation to a surface of said fibre reinforced thermoplastic material and fusibly adherent thereto, and a second film of a second thermoplastic material adhered to said film of first thermoplastic material and being resistant to the protrusion therethrough of fibres from said fibre reinforced thermoplastic material when subjected to lamination under said heat and pressure.

Preferably said surfacing material comprises a co-extruded film material.

Which comprises a first film of polyethylene and a second film of polyethylene terephthalate.

The surfacing material can also comprise a glazing film which softens when subjected to said heat and pressure to permit glazing when subjected to pressure and an adhesive film disposed between the glazing film and the second film.

The fibre reinforced plastics material may optionally be formed to a desired shape simultaneously with the application of the forming pressure.

The invention can be performed in various ways and some embodiments will now be described by way of example and with reference to the accompanying drawings in which :-
Figure 1 is a diagrammatic cross-section of a sheet of fibre reinforcing material provided with surface films made according to a known procedure;
Figure 2 is a diagrammatic cross-section of the construction of sheet made according to the invention;
Figure 3 is a diagrammatic cross-section of an improvement in the sheet construction of Figure 2;

In order to determine the effectiveness of the present invention, sheets according to known procedures were first made. Thus, a 38 cm x 38 cm square of glass fibre reinforced polypropylene was prepared as follows : 174 grams of polypropylene powder, Grade GV521E supplied by ICI Ltd. was dispersed in 35 litres of water, together with 52.5 grams of sodium dodecyl benzene sulphonate foaming agent, and 261 grams of glass fibre Grade TURAN EX14 supplied by Klockner-Schott GmbH, of 12 millimetres length. The mixture was foamed up to an apparent density of 0.3 in a flotation cell supplied by Denver Equipment Co., and drained under vacuum through a wire sieve, to form a uniform sheet containing 60% loose glass fibres and polypropylene powder.

After drying in an oven at 100° C, the sheet was covered with several layers of oriented polypropylene film, supplied by ICI Ltd., inserted in a 38 cm x 38 cm electrically heated press for 45 minutes, and preheated under a load of 10 tonnes to a uniform temperature of 200° C. The heating was then turned off, cooling water circulated through the platens, and a load of 40 tonnes applied at the same time. The sheet was held under that load until cold.

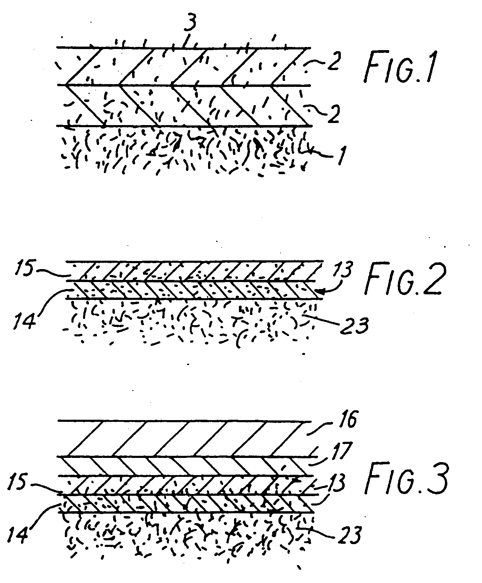

A sheet of this kind is shown in Figure 1 of the drawings, the glass fibres reinforced sheet being indicated at 1, and the two layers of oriented polypropylene film being indicated at 2. Figure 1 illustrates how the reinforcing fibres tend to extend and pass through the films 2, with some reaching the outer surface 3 of the outer film 2 to mar its smoothness.

### EXAMPLE 1

In this example the fibre reinforced thermoplastics sheet was again prepared in the same way but a multi-layer film was employed. This was a film of 62 gram/metre² polyethylene terephthalate which was co-extruded with a film of polyethylene. The multi-layer film was applied with the polyethylene layer nearest the fibre reinforced sheet so as to act as a bonding layer. The assembly was then again hot pressed to produce the construction shown in Figure 2. In this drawing the fibre reinforced sheet is indicated by reference numeral 23 and the multi-layer sheet by reference numeral 13. The film of polyethylene of the multi-layer sheet 13 is indicated by reference numeral 14. It will again be seen that although the fibres penetrate the bonding layer 14 they do not extend completely through the layer of polyethylene terephthalate which is indicated by reference numeral 15. It is believed that the heat transfer from the hot platens and from the hot sheet into the cold surface film, was sufficient to melt the top surface, and to bond the sheet to the film but that an only partly-molten impenetrable barrier layer remained in the centre of the film, preventing the protrusion of fibres to the surface.

### EXAMPLE 2

In order to even further improve the surface smoothness of the material shown in Figure 2, it is possible to provide a top glazing layer. As shown in Figure 3 this is in the form of a sheet of oriented polypropylene film 16 with a weight of 14 gram/metre². In order to improve adhesion of the film 16 to the two layer film 13, a 32 gram/metre² adhesive film 17 of modified polypropylene sold under the trade name "Polybond" is provided.

The assembly described in Example 1, together with layers 16 and 17 was again hot pressed.

The smoothness of each of the sheets made according to known procedures and also according to Examples 1 and 2, was measured using a "TALYSURF 10" instrument made by Taylor-Hobson. That of the known procedure was unacceptable, but that of Example 1 was good. The sheet of Example 2 showed a distinct improvement over that of Example 1.

It will be appreciated that although the Examples above describe the preparation of flat articles, the press may be suitably modified to produce shaped articles. The correct choice of pressing and cooling conditions must be found by trial and error in each case, depending on the severity of the deformation and the composition of the surface layer assembly.

## Claims

1. A method of providing a moulded or mouldable fibre reinforced thermoplastics material having improved surface smoothness in which thermoplastic surfacing material is laminated to said fibre reinforced thermoplastics material under heat and pressure, characterised in that said surfacing material comprises a multi-layer film which includes a first film of a first thermoplastics material arranged in contiguous relation to a surface of said fibre reinforced thermoplastic material and fusibly adherent thereto, and a second film of a second thermoplastic material adhered to said film of first thermoplastic material and being resistant to the protrusion therethrough of fibres from said fibre reinforced thermoplastics material when subjected to lamination under said heat and pressure.

2. A method as claimed in Claim 1 characterised in that said surfacing material comprises a co-extruded film material. Which comprises a first film of polyethylene and a second film of polyethylene terephthalate.

3. A method as claimed in Claim 1 characterised in that the surfacing material further comprises a glazing film which softens when subjected to said heat and pressure to permit glazing when subjected to pressure and an adhesive film disposed between the glazing film and the second film.

4. A method as claimed in any one of the preceding claims characterised in that the fibre reinforced plastics material is formed to a desired shape simultaneously with the application of the forming pressure.

## Patentansprüche

1. Verfahren zur Herstellung eines geformten oder formbaren faserverstärkten thermoplastischen Materials mit verbesserter Oberflächenglattheit, bei dem thermoplastisches Deckmaterial unter Hitze und Druck auf besagtes faserverstärktes thermoplastisches Material laminiert wird, dadurch **gekennzeichnet,** daß besagtes Deckmaterial aus einem mehrlagigen Film besteht, welcher umfasst einen ersten Film eines ersten thermoplastischen Materials, welches in Berührung mit einer Oberfläche des besagten faserverstärkten thermoplastischen Materials ist und schmelzbar daran anhaftet und einen zweiten Film eines zweiten thermoplastischen Materials, der anhaftbar oder anhaftend an besagtem Film aus dem ersten thermoplastischen Material ist und widerstandsfähig gegen die Durchwanderung von Fasern aus besagtem faserverstärkten thermoplastischen Material ist, wenn unter besagter Hitze und besagtem Druck laminiert wird.

2. Verfahren gemäß Anspruch 1, dadurch **gekennzeichnet,** daß besagtes Deckmaterial ein gemeinsam stranggepreßtes Filmmaterial umfasst, welches umfasst einen ersten Film aus Polyäthylen und einen zweiten Film aus Polyäthylenterephthalat.

3. Verfahren gemäß Anspruch 1, dadurch **gekennzeichnet,** daß das Deckmaterial zusätzlich umfasst einen glasartigen Film, welcher erweicht, wenn er besagter Hitze und besagtem Druck ausgesetzt wird, um die Verglasung zu erlauben, wenn er dem Druck ausgesetzt wird und einen Haftfilm, der zwischen dem Glasfilm und dem zweiten Film angeordnet ist.

4. Verfahren gemäß einem der voranstehenden Ansprüche, dadurch **gekennzeichnet,** daß das faserverstärkte Kunststoffmaterial gleichzeitig mit der Anwendung des Formdrucks in eine gewünschte Form gebracht wird.

## Revendications

1. Procédé de fabrication d'une matière thermoplastique moulée ou moulable renforcée de fibres ayant un poli de surface amélioré dans lequel on assemble une matière de surface thermoplastique et ladite matière thermoplastique renforcée de fibres, sous l'action de la chaleur et de la pression, caractérisé en ce que ladite matière de surface comprend une pellicule multicouches qui **comporte** une première pellicule d'une première matière thermoplastique disposée dans une relation de contiguïté avec une surface de ladite matière thermoplastique renforcée de fibres et susceptible d'y adhérer par fusion, et une seconde pellicule d'une seconde matière thermoplastique adhérant à ladite pellicule de première matière thermoplastique et résistant au passage de fibres provenant de ladite matière thermoplastique renforcée de fibres lorsqu'on la soumet à une opération d'assemblage dans lesdites conditions de température et de pression.

2. Procédé selon la revendication 1, caractérisé en ce que ladite matière de surface comprend une matière en pellicule coextrudée qui comprend une première pellicule de polyéthylène et une seconde pellicule de téréphtalate de polyéthylène.

3. Procédé selon la revendication 1, caractérisé en ce que la matière de surface comprend en outre une pellicule de glaçage qui se ramollit lorsqu'on la soumet auxdites conditions de température et de pression pour permettre un glaçage lorsqu'on la soumet à une pression, et une pellicule adhésive disposée entre la pellicule de glaçage et la seconde pellicule.

4. Procédé selon l'une quelconque des revendications précédentes, caractérisé en ce que la matière plastique renforcée de fibres est façonnée pour lui donner une forme désirée en même temps qu'on applique la pression de façonnage.
